# FASCICULE DE BREVET EUROPEEN

(11) **EP 4 485 496 B1**
(45) Date de publication et mention de la délivrance du brevet: **18.02.2026**
(21) Numéro de dépôt: 24182435.8
(22) Date de dépôt: 14.06.2024
(51) Int. Cl.: H01H 71/12

(54) **DISPOSITIF DE PROTECTION ELECTRIQUE**
ELEKTRISCHE SCHUTZVORRICHTUNG
ELECTRICAL PROTECTION DEVICE

(30) Priorité: 27.06.2023 FR 2306704
(43) Date de publication de la demande: 01.01.2025
(73) Titulaire: Schneider Electric Industries SAS, 92500 Rueil-Malmaison (FR)
(72) Inventeur: DOMEJEAN, Eric, 38340 Voreppe (FR); FRANGIN, Emmanuel, 38100 Grenoble (FR)
(74) Mandataire: Schneider Electric

(56) Documents cités:
- FR-A1- 3 123 141
- US-A1- 2019 341 213
- US-A1- 2021 066 013

## Description

### DOMAINE TECHNIQUE

La présente invention concerne le domaine technique des dispositifs et systèmes de protection électrique, tels que des disjoncteurs électriques. Plus particulièrement, l'invention concerne le domaine technique des disjoncteurs électriques dits à « coupure statique » (« solid state circuit breaker » en anglais).

### ETAT DE LA TECHNIQUE ANTERIEURE

De nombreux dispositifs de commutation électrique de type électromécanique, tels que des disjoncteurs à coupure dans l'air, et notamment les disjoncteurs miniatures (MCB, pour « miniature circuit breaker » en anglais) comportent généralement une chambre de coupure. La chambre de coupure est configurée pour éteindre un arc électrique qui apparaît dans l'air entre les contacts électriques de l'appareil lorsque des contacts électriques sont séparés à la suite d'un déclenchement de l'appareil.

La chambre de coupure comporte typiquement, outre au moins une pièce mobile permettant d'ouvrir le circuit, un empilement de plaques métalliques superposées les unes au-dessus des autres pour allonger et éteindre l'arc électrique pouvant apparaitre à l'ouverture du circuit.

Toutefois, afin d'améliorer les performances de ces dispositifs de protection électrique (ci-après « dispositif de protection »), il a été proposé de remplacer la chambre de coupure par un dispositif de coupure électronique comportant des interrupteurs de puissance à base de composants semi-conducteurs. De tels disjoncteurs sont dits à « coupure statique » (« solid state » en anglais).

La demande de brevet français FR3123141 publiée le 25 novembre 2022 présente de tels dispositifs de protection électrique.

Les performances améliorées de ces dispositifs de protection électrique sont, par exemple, avantageuses dans les systèmes électriques à courant continu (« direct current (DC) » en anglais) comportant des batteries d'accumulateurs électrochimiques, pour lesquels les dispositifs de protection électrique doivent être capables, en cas d'apparition d'un défaut électrique, d'interrompre des courants de forte intensité avec un temps de réaction très rapide.

Ces dispositifs de protection électrique à semi-conducteurs doivent être capables d'interrompre le courant électrique avec au moins autant de fiabilité et de sécurité que les dispositifs de protection électromécaniques. Ces exigences de fiabilité et de sécurité sont définies dans des normes, par exemple la norme « UL 489i » gérée par l'organisme de certification Underwriters' Laboratories (UL).

Cette norme, comprend des exigences à respecter pour des disjoncteurs à boîtier moulé (ou moulé hybride) à semi-conducteurs (« solid state molded-case circuit breakers (SSCB) » ou « solid state hybrid molded-case circuit breakers (SSHCB) » en anglais).

Ces exigences couvrent en 2023 des disjoncteurs d'une valeur nominale allant par exemple jusqu'à 1000 V pour un courant alternatif et 1500 V pour un courant continu qui commutent en utilisant des semi-conducteurs. Ces dispositifs de protection sont destinés par exemple à assurer la protection des entrées de service, des lignes d'alimentation et des circuits de dérivation. Ces dispositifs peuvent nécessiter une alimentation de commande auxiliaire.

Cette norme définit qu'un disconnecteur doit être capable de couper un courant d'une intensité égale à six fois le courant nominal à la fermeture et à l'ouverture en cas de défaillance de l'électronique de coupure.

L'objet de la présente invention est de proposer un dispositif de protection électrique comprenant un mécanisme de coupure en cas de défaillance de l'électronique de coupure.

### EXPOSE DE L'INVENTION

Les objectifs susmentionnés sont, au moins en partie, atteints par un dispositif de protection électrique comprenant deux terminaux de raccordement, des contacts électriques principaux, séparables et connectés entre les deux terminaux de raccordement, les contacts électriques principaux étant commutables entre un état ouvert, dans lequel les contacts électriques sont séparés, et un état fermé, dans lequel les contacts électriques sont en contact, un mécanisme de commutation, le mécanisme de commutation étant adapté pour commuter les contacts électriques principaux vers l'état ouvert, un interrupteur de puissance à semi-conducteurs connecté en série avec les contacts électriques principaux, l'interrupteur de puissance étant adapté pour basculer entre un état ouvert, bloquant le passage du courant, et un état fermé, laissant passer le courant et un dispositif de sécurité connecté en parallèle des contacts électriques principaux. Le dispositif de sécurité comprend des contacts électriques secondaires, les contacts électriques secondaires étant séparables et déplaçables entre un état ouvert et un état fermé. Le mécanisme de commutation est adapté pour commuter les contacts électriques secondaires vers l'état ouvert. Le dispositif de protection électrique comprend une unité de commande, l'unité de commande étant adaptée pour basculer le dispositif de protection électrique entre un état ouvert, dans lequel l'interrupteur de puissance, les contacts électriques principaux et les contacts électriques secondaires sont dans un état ouvert, et un état fermé, dans lequel l'interrupteur de puissance, les contacts électriques principaux et les contacts électriques secondaires sont dans un état fermé. L'unité de commande est adaptée pour commander l'interrupteur de puissance et le mécanisme de commutation, et pour, lors de la fermeture du dispositif de protection électrique, fermer les contacts électriques secondaires du dispositif de sécurité avant les contacts électriques principaux et l'interrupteur de puissance, et, lors de l'ouverture du dispositif de protection électrique, ouvrir les contacts électriques principaux et l'interrupteur de puissance avant d'ouvrir les contacts électriques secondaires du dispositif de sécurité. Le dispositif de sécurité est adapté pour, lorsqu'un courant d'une intensité supérieure à une valeur prédéterminée circule dans ledit dispositif de sécurité, activer le mécanisme de commutation afin de commuter les contacts électriques principaux et les contacts électriques secondaires vers l'état ouvert.

Avantageusement, le dispositif de protection électrique est protégé contre un possible défaut de l'interrupteur de puissance qui laisserait passer un courant malgré le fait que l'interrupteur de courant est supposé être dans un état ouvert.

En effet, lors de la fermeture du dispositif de protection électrique - lorsque le dispositif de protection électrique passe d'un état ouvert à un état fermé - les contacts électriques secondaires du dispositif de sécurité sont fermés en premier. Dans l'hypothèse où l'interrupteur de puissance, bien que dans l'état ouvert, laisserait malgré tout passer un courant, alors le dispositif de sécurité active le mécanisme de commutation pour ouvrir immédiatement les contacts électriques principaux et les contacts électriques secondaires, possiblement en cours de fermeture, interrompant alors le courant dans le dispositif de protection électrique.

De même, lors de l'ouverture du dispositif de protection électrique - lorsque le dispositif de protection électrique passe d'un état fermé à un état ouvert - les contacts électriques secondaires du dispositif de sécurité sont ouvert en dernier. Dans l'hypothèse où l'interrupteur de puissance, bien que commuté dans l'état ouvert, laisserait malgré tout encore passer un courant, alors le dispositif de sécurité active le mécanisme de commutation pour ouvrir immédiatement les contacts électriques principaux et les contacts électriques secondaires, interrompant alors le courant dans le dispositif de protection électrique.

Selon un mode de réalisation de l'invention, le dispositif de sécurité comprend un premier percuteur adapté pour, lorsque le courant d'une intensité supérieure à une valeur prédéterminée circule dans ledit dispositif de sécurité, activer le mécanisme de commutation afin de commuter les contacts électriques principaux et les contacts électriques secondaires vers l'état ouvert.

Avantageusement, l'éventuel courant traversant le percuteur permet de déclencher ledit percuteur et d'activer le mécanisme de commutation.

Selon un mode de réalisation de l'invention, le mécanisme de commutation étant adapté pour commuter les contacts électriques principaux séparables et les contacts électriques secondaires séparables vers l'état ouvert et vers l'état fermé, le dispositif de sécurité est en outre adapté pour, lorsque le courant d'une intensité supérieure à une valeur prédéterminée circule dans ledit dispositif de sécurité, et après avoir activer le mécanisme de commutation afin de commuter les contacts électriques principaux séparables et les contacts électriques secondaires séparables vers l'état ouvert : bloquer le mécanisme de commutation afin d'empêcher la commutation des contacts électriques principaux et des contacts électriques secondaires vers l'état fermé.

Avantageusement, le dispositif de sécurité, en cas de déclenchement à la suite d'une éventuelle défaillance de l'interrupteur de puissance, bloque ensuite toute possibilité de fermeture des contacts électriques principaux séparables et des contacts électriques secondaires, mettant en sécurité le dispositif de protection électrique.

Selon un mode de réalisation de l'invention, le premier percuteur comprend un élément de blocage adapté pour maintenir le mécanisme de commutation bloqué une fois que le percuteur est percuté.

Avantageusement, le percuteur, une fois déclenché, est bloqué dans sa position déclenchée, ce qui permet de maintenir le mécanisme de commutation bloqué, empêchant ainsi toute possibilité de fermeture des contacts électriques principaux séparables et des contacts électriques secondaires.

Selon un mode de réalisation de l'invention, le dispositif de sécurité comprend en outre un élément limiteur de courant connecté en série avec les contacts électriques secondaires.

Avantageusement, si un arc électrique se forme lors de l'ouverture des contacts électriques secondaires, l'élément limiteur de courant permet de réduire l'intensité du courant traversant le dispositif de sécurité et ainsi de couper l'arc électrique entre les contacts électriques secondaires en position ouvert. Ceci est particulièrement avantageux pour un courant continu et/ou de forte tension (par exemple, pour une tension supérieure à 750Vdc).

Selon un mode de réalisation de l'invention, l'élément limiteur de courant connecté en série avec les contacts électriques secondaires est un fusible.

Avantageusement, le fusible permet de couper le courant dans le dispositif de sécurité de façon définitive selon le dimensionnement du fusible.

Selon un mode de réalisation de l'invention, le dispositif de sécurité comprend en outre un écran mobile, l'écran mobile étant constitué d'un matériau isolant électrique et adapté pour être déplacé entre une première position et une deuxième position, l'écran mobile étant placé par défaut dans la première position et étant placé entre les contacts électriques principaux afin d'empêcher le contact entre les contacts électriques principaux dans la deuxième position. Le dispositif de sécurité comprend un deuxième percuteur, le deuxième percuteur étant adapté pour, lorsque le courant d'une intensité supérieure à une valeur prédéterminée circule dans ledit dispositif de sécurité, déplacer l'écran mobile dans la deuxième position.

Avantageusement, en cas de défaillance éventuelle de l'interrupteur de puissance, un écran isolant est mis en place, empêchant physiquement toute fermeture des contacts électriques principaux. Ainsi, en combinaison avec la présence d'un fusible - coupant de fait le dispositif de sécurité -, cette caractéristique empêche toute fermeture des contacts électriques principaux et rend la coupure du courant pour le dispositif de protection indépendante de toute action possible du mécanisme de commutation.

Selon un mode de réalisation de l'invention, le premier percuteur et le deuxième percuteur étant un même percuteur.

Avantageusement, l'architecture du dispositif de protection est simplifiée et rendue plus compacte par l'usage d'un même percuteur pour activer le mécanisme de commutation et placer l'écran isolant entre les contacts principaux.

### BREVE DESCRIPTION DES FIGURES

D'autres caractéristiques et avantages de modes de réalisation du dispositif de protection électrique selon l'invention apparaîtront dans la description suivante, donnés à titre d'exemples non limitatifs, en référence aux figures annexées dans lesquels :
[Fig. 1] La figure 1 illustre un dispositif de protection selon l'état de l'art tel que divulgué dans la demande de brevet français FR3123141 publiée le 25 novembre 2022.
[Fig. 2] La figure 2 illustre schématiquement le dispositif de protection selon l'état de l'art.
[Fig. 3] La figure 3 illustre schématiquement l'invention selon un premier mode de réalisation.
[Fig. 4] La figure 4 illustre schématiquement l'invention selon un deuxième mode de réalisation.
[Fig. 5] La Figure 5 illustre un procédé de mise en sécurité du dispositif de protection selon un mode de réalisation de l'invention, mis en œuvre lors de l'ouverture du dispositif de protection.
[Fig. 6] La Figure 6 illustre un procédé de mise en sécurité du dispositif de protection selon un mode de réalisation de l'invention, mis en œuvre lors de la fermeture du dispositif de protection.
[Fig. 7] La figure 7 illustre schématiquement une architecture de mise en œuvre de l'invention selon un premier mode de réalisation, permettant de gérer la cinématique de décalage entre le contact principal et le contact d'arc.
[Fig. 8] La figure 8 illustre schématiquement une architecture de mise en œuvre de l'invention selon un deuxième mode de réalisation, permettant de gérer la cinématique de décalage entre le contact principal et le contact d'arc.
[Fig. 9] La figure 9 illustre schématiquement une architecture de mise en œuvre de l'invention selon un troisième mode de réalisation, permettant de gérer la cinématique de décalage entre le contact principal et le contact d'arc.
[Fig. 10] La figure 10 illustre schématiquement une architecture de mise en œuvre de l'invention selon un quatrième mode de réalisation, permettant de gérer la cinématique de décalage entre le contact principal et le contact d'arc.
[Fig. 11] La figure 11 illustre schématiquement une architecture d'un actionneur comprenant un élément de blocage dans sa position activé selon un premier mode de réalisation.
[Fig. 12] La figure 12 illustre schématiquement une architecture d'un actionneur comprenant un élément de blocage dans sa position activé selon un deuxième mode de réalisation.
[Fig. 13] La figure 13 illustre schématiquement une architecture d'un actionneur comprenant un élément de blocage dans sa position activé selon un troisième mode de réalisation.
[Fig. 14] La figure 14 illustre schématiquement une architecture d'un actionneur comprenant un élément de blocage dans sa position activé selon un quatrième mode de réalisation.
[Fig. 15] La figure 15 illustre schématiquement une architecture d'un actionneur comprenant un élément de blocage dans sa position activé selon un cinquième mode de réalisation.

### DESCRIPTION DETAILLEE DE CERTAINS MODES DE REALISATION

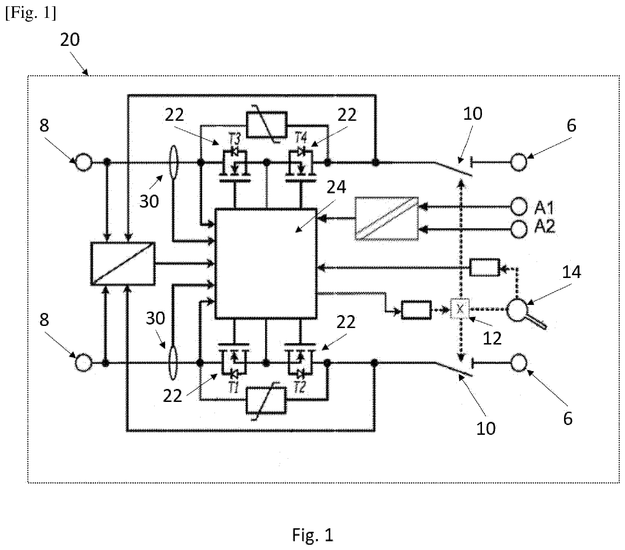

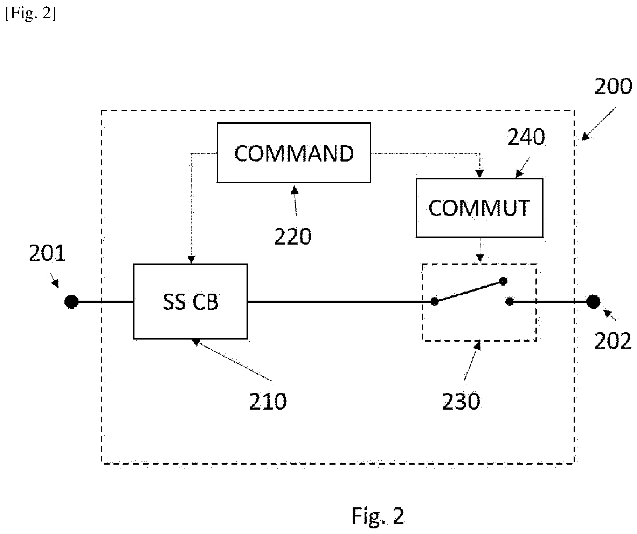

La **figure 1** illustre un dispositif de protection 20 selon l'état de l'art tel que divulgué dans la demande de brevet français FR3123141 publiée le 25 novembre 2022. La figure 1 correspond à la figure 2 de la demande de brevet FR3123141 modifiée pour supprimer les références inutiles. Une description détaillée de ce dispositif de protection 20 est réalisée dans le document FR3123141, particulièrement à partir du paragraphe [0032] et jusqu'au paragraphe [0097] du document FR3123141. Le mode de fonctionnement du dispositif de protection 20 est détaillé à partir du paragraphe [0098] du document FR3123141. Les références utilisées dans la description de la figure 1 correspondent aux références utilisées dans le document FR3123141.

Le dispositif de protection 20 illustré dans la figure 1 comprend deux paires de terminaux de raccordement 6 et 8 : un premier terminal d'entrée 6 relié à un premier terminal de sortie 8 par l'intermédiaire d'une première ligne de connexion (en haut de la figure 1), et un deuxième terminal d'entrée 6 relié à un deuxième terminal de sortie 8 par l'intermédiaire d'une deuxième ligne de connexion (en bas de la figure 1).

Le dispositif de protection 20 illustré dans la figure 1 comprend des contacts électriques séparables 10 connectés entre les terminaux de raccordement 6 et 8, et un mécanisme de commutation 12 comportant un organe de commande 14 (aussi nommée manette de commande ou levier de manœuvre dans ce qui suit). Le levier de manœuvre 14 est par exemple un levier pivotant accessible depuis l'extérieur du boîtier 4 et destiné à être manipulé par un utilisateur.

Les contacts électriques séparables 10 sont déplaçables entre un état ouvert, dans lequel les contacts électriques séparables 10 sont séparés, et un état fermé, dans lequel les contacts électriques séparables 10 sont en contact. Dans l'état ouvert, les contacts électriques séparables 10 sont par exemple séparés l'un de l'autre par un volume d'air ambiant faisant office d'isolant électrique, ce qui empêche la circulation d'un courant électrique. Le mécanisme de commutation 12 permet de commuter les contacts électriques séparables 10 entre l'état ouvert et l'état fermé. Le mécanisme de commutation 12 est configuré pour déplacer les contacts électriques 10 vers un état ouvert en réponse à un ordre de commutation. L'ordre de commutation peut être envoyé par un déclencheur (« déclenchement automatique ») ou résulter d'une action d'un utilisateur sur le levier de manœuvre 14 (« déclenchement manuel »).

Le dispositif de protection 20 comporte également un module de coupure électronique qui est configuré pour interrompre un courant électrique entre les terminaux de raccordement 6 et 8. Le module de coupure électronique, aussi appelé module à coupure statique, comprend des composants électroniques, notamment des composants semi-conducteurs, tels que des transistors de puissance. Le dispositif de protection 20 diffère des appareils de protection électromécaniques à coupure dans l'air qui comportent une chambre de coupure (chambre d'extinction d'arc).

Le dispositif de protection 20 comporte ainsi au moins un interrupteur de puissance 22 connecté en série avec les contacts électriques séparables 10. Chaque interrupteur de puissance 22 est commutable entre un état électriquement bloquant et un état électroniquement passant. Dans l'exemple illustré dans la figure 1, le dispositif de protection 20 comporte quatre interrupteurs de puissance 22, identifiés par les références TI, T2, T3 et T4. Selon un mode de réalisation alternatif de l'invention, le dispositif de protection 20 peut comprendre un nombre différent d'interrupteurs de puissance 22. Ainsi, le nombre d'interrupteurs de puissance 22 peut varier, selon la topologie de l'appareil et notamment le nombre de pôles (monophasé, polyphasé, avec ou sans ligne de neutre) mais aussi en fonction du calibre en courant de l'appareil. Chaque interrupteur de puissance 22 peut, en pratique, être implémenté par plusieurs composants (tels que des transistors) connectés en parallèle en fonction du calibre du disjoncteur que l'on veut réaliser

Le dispositif de protection 20 comporte en outre un circuit électronique de commande 24 couplé avec ledit au moins un interrupteur de puissance 22 (i.e., avec chaque interrupteur de puissance 22). En d'autres termes, le circuit électronique de commande 24 permet de piloter chacun des interrupteurs de puissance 22 afin de les commuter entre l'état électriquement bloquant et l'état électroniquement passant. Dans de nombreux modes de réalisation, le circuit électronique de commande 24 comporte un processeur, tel qu'un microcontrôleur programmable ou un microprocesseur. Le processeur est avantageusement couplé à une mémoire informatique, ou à tout support d'enregistrement de données lisible par ordinateur, qui comporte des instructions exécutables et/ou un code logiciel prévu pour mettre en œuvre un procédé de détection d'un défaut électrique lorsque ces instructions sont exécutées par le processeur. Notamment, ce procédé permet de détecter un défaut électrique tel qu'un défaut de courant de surcharge, un défaut de court-circuit, un défaut de courant différentiel, un défaut de présence d'arc série (ou différentiel) sur la ligne à protéger, mais aussi des surtensions ou des sous-tensions.

Le circuit électronique de commande 24 est configuré pour commuter les interrupteurs de puissance 22 vers un état ouvert lorsqu'un défaut électrique est détecté, par exemple par un circuit de mesure tel que le circuit de mesure 30.

Le dispositif de protection 20 comporte un système de synchronisation visant à synchroniser la commutation des interrupteurs de puissance 22 avec l'ouverture des contacts 10, dans le but d'éviter l'apparition d'arcs électriques lors de l'ouverture des contacts électriques 10 et de fournir une isolation électrique lors de l'ouverture du dispositif de protection 20. Ainsi, lors d'une phase d'ouverture du dispositif de protection 20, le circuit électronique de commande 24 commande la commutation des interrupteurs de puissance 22 vers leur état bloquant avant que les contacts électriques 10 ne soient séparés, ce qui empêche l'apparition d'un arc électrique et permet ainsi d'interrompre le courant de façon sûre. En revanche, une fois que les contacts électriques 10 sont dans la position ouverte, les contacts électriques 10 permettent de créer une isolation électrique dans l'air (« air gap » en anglais). Cela évite qu'un courant électrique, tel qu'un courant de fuite des interrupteurs de puissance 22, ou un courant résultant d'une défaillance de ces interrupteurs de puissance 22, puisse à nouveau circuler entre les terminaux après que le dispositif de protection 20 ait été déclenché.

La **figure 2** illustre schématiquement un dispositif de protection 200 connu de la personne du métier similaire au dispositif de protection 20 précédemment décrit.

Le dispositif de protection 200 comprend deux terminaux de raccordement 201 et 202. Les deux terminaux de raccordements 201 et 202 sont similaires aux terminaux de raccordements 6 et 8 de la figure 1 décrits précédemment.

Le dispositif de protection 200 comprend des contacts électriques principaux 230, séparables et connectés entre les deux terminaux de raccordement 201 et 202, les contacts électriques principaux 230 étant commutables entre un état ouvert, dans lequel les contacts électriques sont séparés afin de bloquer le passage d'un courant, et un état fermé, dans lequel les contacts électriques sont en contact afin de permettre le passage d'un courant. Les contacts électriques principaux 230 sont similaires aux contacts électriques séparables 10 de la figure 1 décrits précédemment.

Le dispositif de protection 200 comprend un mécanisme de commutation 240, le mécanisme de commutation étant adapté pour commuter les contacts électriques principaux 230 entre l'état ouvert et l'état fermé. Le mécanisme de commutation 240 est adapté pour commuter les contacts principaux 230 vers l'état ouvert. Le mécanisme de commutation 240 est similaire au mécanisme de commutation 12 de la figure 1 décrit précédemment.

Le dispositif de protection 200 comprend un interrupteur de puissance 210 à semi-conducteurs connecté en série avec les contacts électriques principaux 201 et 202, l'interrupteur de puissance étant adapté pour basculer entre un état ouvert, bloquant le passage du courant, et un état fermé, laissant passer le courant. L'interrupteur de puissance 210 est similaire à l'interrupteur de puissance 22 de la figure 1 décrit précédemment.

Le dispositif de protection 200 comprend une unité de commande 220, l'unité de commande 220 étant adaptée pour basculer le dispositif de protection électrique 200 entre un état ouvert, dans lequel l'interrupteur de puissance 210 et les contacts électriques principaux 230 sont dans l'état ouvert, et un état fermé, dans lequel l'interrupteur de puissance 210 et les contacts électriques principaux 230 sont dans l'état fermé. L'unité de commande 220 est adaptée pour commander l'interrupteur de puissance 210 et le mécanisme de commutation 240, et pour :
- lors de la fermeture du dispositif de protection 200, fermer les contacts électriques principaux 230 avant l'interrupteur de puissance 210, et,
- lors de l'ouverture du dispositif de protection 200, ouvrir l'interrupteur de puissance 210 avant d'ouvrir les contacts électriques principaux 230.

L'unité de commande 220 est similaire au circuit électronique de commande 24 de la figure 1 décrit précédemment.

Ainsi, lors de la fermeture du dispositif de protection 200, les contacts électriques principaux 230 sont fermés avant l'interrupteur de puissance 210. C'est-à-dire, qu'en l'absence de défaut sur l'interrupteur de puissance 210, les contacts électriques principaux 230 sont fermés alors qu'aucun courant ne traverse le dispositif de protection 200.

De même, lors de l'ouverture du dispositif de protection 200, l'interrupteur de puissance 210 est ouvert avant d'ouvrir les contacts électriques principaux 230. C'est-à-dire, qu'en l'absence de défaut sur l'interrupteur de puissance 210, les contacts électriques principaux 230 sont ouverts alors qu'aucun courant ne traverse le dispositif de protection 200.

Dans les deux cas précédents de fermeture ou d'ouverture du dispositif de protection 200, et en l'absence de défaut de l'interrupteur de puissance 210, les contacts électriques principaux 230 sont ouverts ou fermés sans aucun risque d'apparition d'un arc électrique entre les contacts principaux 230.

A l'inverse, dans le cas d'un défaut de l'interrupteur de puissance 210, un courant de défaut peut circuler dans les contacts principaux 230. Cela peut être problématique lors de l'ouverture du dispositif de protection 200 car les contacts principaux 230 ne sont généralement pas conçus pour assurer la coupure d'un arc électrique.

C'est un problème que se propose de résoudre l'invention telle que décrite ci-après.

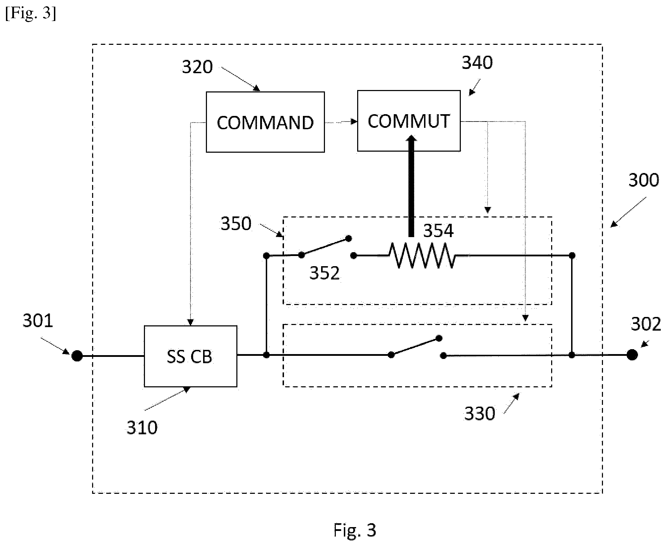

La **figure 3** illustre schématiquement l'invention selon un premier mode de réalisation.

Le dispositif de protection 300 selon ce premier mode de réalisation de l'invention diffère du dispositif de protection 200 en ce qu'il comprend un dispositif de sécurité 350.

Le principe de l'invention est de faire en sorte que le dispositif de sécurité 350 du dispositif de protection 300 soit ouvert en dernier lors de l'ouverture du dispositif de protection 300, et fermé en premier lors de la fermeture du dispositif de protection 300. Dans ces deux situations, et en l'absence de défaut de l'interrupteur de puissance 310, aucun courant ne passe à travers le dispositif de sécurité 350. A l'inverse, en cas de défaut de l'interrupteur de puissance 310, un courant de défaut traverse alors le dispositif de sécurité 350, ce qui permet de déclencher la réouverture et/ou possiblement le blocage en position ouverte du dispositif de protection 300.

Le dispositif de protection 300 comprend deux terminaux de raccordement 301 et 302. Les terminaux de raccordement 301 et 302 sont similaires aux terminaux de raccordement 6 et 8, et 201 et 202, des figures 1 et 2 précédemment décrits.

Le dispositif de protection 300 comprend des contacts électriques principaux 330, séparables et connectés entre les deux terminaux de raccordement 301 et 302, les contacts électriques principaux étant commutables entre un état ouvert, dans lequel les contacts électriques sont séparés, et un état fermé, dans lequel les contacts électriques sont en contact. Les contacts électriques principaux 330 sont similaires aux contacts électriques principaux 10 et 230 des figures 1 et 2 précédemment décrits.

Le dispositif de protection 300 comprend un mécanisme de commutation 340. Le mécanisme de commutation est adapté pour commuter les contacts électriques principaux 330 de l'état ouvert vers l'état fermé et de l'état fermé vers l'état ouvert. Le mécanisme de commutation 340 est similaire aux mécanismes de commutation 12 et 240 des figures 1 et 2 décrits précédemment. Le mécanisme de commutation 340 est adapté pour commuter les contacts électriques principaux 330 de l'état fermé vers l'état ouvert après activation par un percuteur, par exemple le percuteur 354 décrit ci-après.

Selon un mode de réalisation de l'invention, le mécanisme de commutation 340 comprend un levier de manœuvre (non représenté) similaire au levier de manœuvre 14 du dispositif de protection 20 décrit dans le document FR3123141. Le levier de manœuvre peut être associé à un capteur de position mécanique dudit levier de manœuvre. Ce capteur de position mécanique est adapté pour détecter le début d'une manœuvre d'ouverture du mécanisme de commutation 340 et alors émettre une commande électrique à l'unité de commande 320 indiquant qu'une commande d'ouverture mécanique est en train de se produire. L'ensemble du dispositif de protection 300 est configuré pour que la coupure statique (i. e. par l'interrupteur de puissance 310 décrit ci-après) se fasse avant l'ouverture effective des contacts électriques principaux 330 et des contacts électriques secondaires 352.

Le dispositif de protection 300 comprend un interrupteur de puissance 310 à semi-conducteurs connecté en série avec les contacts électriques principaux 330, l'interrupteur de puissance 310 étant adapté pour basculer entre un état ouvert, bloquant le passage du courant, et un état fermé, laissant passer le courant. L'interrupteur de puissance 310 est similaire aux interrupteurs de puissance 22 et 210 des figures 1 et 2 décrits précédemment.

Le dispositif de protection 300 comprend, à la différence du dispositif de protection 200 décrit précédemment, un dispositif de sécurité 350 connecté en parallèle des contacts électriques principaux 330, comme illustré dans la figure 3. Les contacts électriques principaux 330 et le dispositif de sécurité 350 sont tous les deux placés en série de l'interrupteur de puissance 310.

Le rapport entre l'impédance des contacts électriques principaux 330 et l'impédance du dispositif de sécurité 350 est configuré pour que, lorsque le dispositif de protection 300 est fermé, un courant nominal traversant le dispositif de protection 300 passe principalement à travers les contacts électriques principaux 330 (ou « circuit principal »), le courant résiduel traversant le dispositif de sécurité 350 étant, relativement à ce courant nominal, négligeable. Ainsi, pour cela, l'impédance du dispositif de sécurité 350 est significativement supérieure à l'impédance du circuit principal, le circuit principal étant le circuit formé par les contacts électriques principaux 330 en position fermée.

Selon un mode de réalisation de l'invention, l'impédance du dispositif de sécurité 350 est d'un ordre de grandeur cent fois supérieur, préférentiellement mille fois supérieure, encore plus préférentiellement plus de mille fois supérieure, à l'impédance du circuit principal. Par exemple, un ratio entre les deux impédances de l'ordre de mille permet d'obtenir un bon fonctionnement du dispositif de protection 300.

Le dispositif de sécurité 350 comprend des contacts électriques secondaires 352, les contacts électriques secondaires 352 étant séparables et déplaçables entre un état ouvert, empêchant le passage d'un courant, et un état fermé, permettant le passage d'un courant. Le mécanisme de commutation 340 est adapté pour commuter les contacts électriques secondaires 352 vers l'état ouvert. Selon un mode de réalisation, le mécanisme de commutation 340 est adapté pour commuter les contacts électriques secondaires 352 de l'état ouvert vers l'état fermé et de l'état fermé vers l'état ouvert.

Le dispositif de sécurité 350 comprend une unité de commande 320, l'unité de commande 320 étant adaptée pour basculer le dispositif de protection électrique 300 entre un état ouvert, dans lequel l'interrupteur de puissance 310, les contacts électriques principaux 330 et les contacts électriques secondaires 352 sont dans un état ouvert, bloquant le passage d'un courant à travers le dispositif de protection électrique 300, et un état fermé, dans lequel l'interrupteur de puissance 310, les contacts électriques principaux 330 et les contacts électriques secondaires 352 sont dans un état fermé, permettant le passage d'un courant à travers dispositif de protection électrique 300.

L'unité de commande 320 est adaptée pour commander l'interrupteur de puissance 310 et le mécanisme de commutation 340, et pour :
∘ lors de la fermeture du dispositif de protection électrique 300, fermer les contacts électriques secondaires 352 du dispositif de sécurité 350 avant de fermer les contacts électriques principaux 330 puis l'interrupteur de puissance 310, et,
∘ lors de l'ouverture du dispositif de protection électrique 300, ouvrir l'interrupteur de puissance 310 puis les contacts électriques principaux 330 avant d'ouvrir les contacts électriques secondaires 352 du dispositif de sécurité 350.

Le dispositif de sécurité 350 est adapté pour, lorsqu'un courant circule dans ledit dispositif de sécurité 350, activer le mécanisme de commutation 340 afin de commuter les contacts électriques principaux 330 et les contacts électriques secondaires 352 vers l'état ouvert.

Selon un mode de réalisation de l'invention, le dispositif de sécurité 350 comprend un percuteur 354 adapté pour, lorsqu'un courant circule dans ledit dispositif de sécurité 350, activer le mécanisme de commutation 340 afin de commuter les contacts électriques principaux 330 et les contacts électriques secondaires 352 vers l'état ouvert. Un percuteur est ici un mécanisme qui, lorsqu'il est traversé par un courant électrique, est adapté pour mettre en mouvement un élément mobile afin d'aller percuter un élément de déclenchement du mécanisme de commutation 340. Un percuteur est par exemple un déclencheur électromagnétique, comprenant typiquement une bobine d'excitation entourant coaxialement un fourreau isolant de forme tubulaire, à l'intérieur duquel est monté à coulissement un noyau ferromagnétique mobile. Le noyau ferromagnétique peut être mis en mouvement lorsqu'un courant parcourt la bobine d'excitation et percuter alors l'élément de déclenchement du mécanisme de commutation 340. Selon un mode de réalisation alternatif de l'invention, le percuteur 354 est un actionneur à palette. Plus généralement, le percuteur 354 peut être un actionneur électromagnétique d'un autre type.

Dans le cas du dispositif de protection 300, lors de l'ouverture du dispositif de protection 300, les contacts électriques principaux 330 et l'interrupteur de puissance 310 sont ouverts avant d'ouvrir les contacts électriques secondaires 352 du dispositif de sécurité 350. Ainsi, en cas de défaut de l'interrupteur de puissance 310, le courant de défaut présent traverse le seul dispositif de sécurité 350. Le dispositif de sécurité 350 est alors adapté pour couper le courant de défaut.

Selon un mode de réalisation de l'invention, les contacts électriques secondaires 352 sont adaptés pour couper un éventuel courant de défaut.

Selon un mode de réalisation de l'invention, l'impédance du dispositif de sécurité 350 est adaptée afin de réduire l'intensité d'un éventuel courant de défaut traversant le dispositif de sécurité 350.

De même, lors de la fermeture du dispositif de protection 300, les contacts électriques secondaires 352 du dispositif de sécurité 350 sont fermés avant les contacts électriques principaux 330 et l'interrupteur de puissance 310. Ainsi, en cas de défaut de l'interrupteur de puissance 310, un courant de défaut traverse le dispositif de sécurité 350, le dispositif de sécurité 350 est alors adapté pour activer le mécanisme de commutation 340 afin de commuter les contacts électriques principaux 330 et les contacts électriques secondaires 352 vers l'état ouvert. Toute tentative de fermeture d'un dispositif de protection 300 comprenant un interrupteur de puissance 310 défectueux est ainsi empêchée.

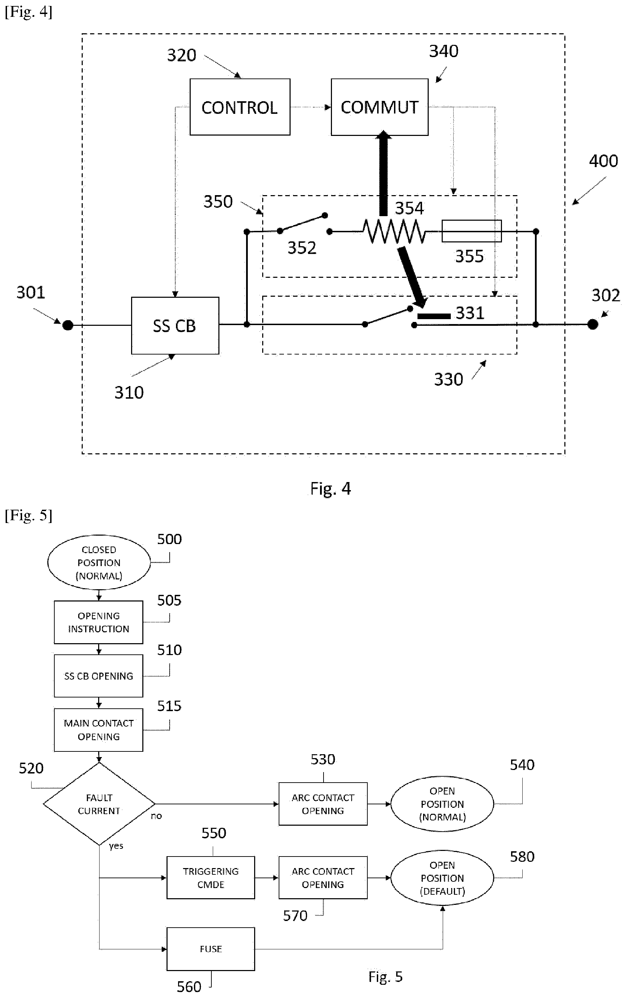

La **figure 4** illustre schématiquement l'invention selon un deuxième mode de réalisation.

Le dispositif de protection 400 de la figure 4 diffère du dispositif de protection 300 illustré dans la figure 3 en ce que le dispositif de protection 400 comprend en outre un élément limiteur de courant 355, connecté en série avec les contacts électriques secondaires 352, et un écran mobile 331.

L'écran mobile 331 est constitué d'un matériau isolant électrique et est adapté pour être déplacé entre une première position et une deuxième position, l'écran mobile 331 étant placé par défaut dans la première position et étant placé entre les contacts électriques principaux afin d'empêcher le contact entre les contacts électriques principaux 330 dans la deuxième position.

Selon un mode de réalisation alternatif de l'invention, le dispositif de protection 400 comprend, en plus du premier percuteur 354, un deuxième percuteur. Le deuxième percuteur est adapté pour déplacer l'écran mobile 331 dans la deuxième position lorsqu'un courant circule dans le dispositif de sécurité 350.

Selon un mode de réalisation, l'écran mobile 331 peut passer de la première à la deuxième position, et de la deuxième position à la première position, selon la position du deuxième percuteur.

Selon un autre mode de réalisation, l'écran mobile 331 reste en place une fois qu'il est dans la deuxième position, bloquant définitivement les contacts électriques principaux.

Selon le mode de réalisation illustré dans la figure 4, le premier percuteur 354 et le deuxième percuteur sont le même percuteur 354, celui-ci étant adapté pour à la fois activer le mécanisme de commutation 340 et placer l'écran 331 dans la deuxième position lorsqu'un courant de défaut le parcourt.

Avantageusement, en cas de défaut de l'interrupteur de puissance 310, l'écran isolant 331 est mis en place dans la deuxième position, empêchant physiquement la fermeture des contacts électriques principaux 330.

Avantageusement, l'élément limiteur de courant 355 permet d'augmenter la tension d'arc (en complément de la tension d'arc des contacts secondaires 352).

Selon un mode de réalisation de l'invention, l'élément limiteur de courant 355 est un fusible réarmable à coefficient en température positif (CTP) (*polymeric positive temperature coefficient device* (PPTC) en anglais).

Avantageusement, lorsque l'élément limiteur de courant 355 est un fusible, le percuteur 354 comprend un élément de blocage afin de possiblement prévoir le remplacement du composant endommagé, par exemple l'interrupteur de puissance endommagé et/ou le fusible.

Selon un autre mode de réalisation de l'invention, l'élément limiteur de courant 355 est un fusible. Dans cet autre mode de réalisation, la mise en place de l'écran 331 entre les contacts électriques principaux 330 et la fusion du fusible 355 permettent de garantir que le dispositif de protection 400 est définitivement coupé en cas de défaut de l'interrupteur de puissance 310.

La **Figure 5** illustre un procédé de mise en sécurité du dispositif de protection 300 ou 400 (ci-après dispositif de protection) tel que décrit précédemment selon un mode de réalisation de l'invention, mis en œuvre lors de l'ouverture du dispositif de protection.

L'étape 500 correspond à l'état fermé du dispositif de protection. Dans cet état fermé, l'interrupteur de puissance 310, les contacts électriques principaux 330 et les contacts électriques secondaires 352 sont fermés, un courant nominal peut parcourir le dispositif de protection.

Dans une étape 505, une commande d'ouverture du dispositif de protection est reçue, par exemple par une action d'un utilisateur sur le levier de manœuvre du mécanisme de commutation 340. Cette commande d'ouverture peut correspondre à une commande manuelle réalisée par un utilisateur grâce à un organe de commande du dispositif de protection (par exemple un levier de manœuvre associé au mécanisme de commutation 340) ou à un déclenchement automatique commandé par l'unité de commande 320 à la suite de la détection d'un défaut électrique.

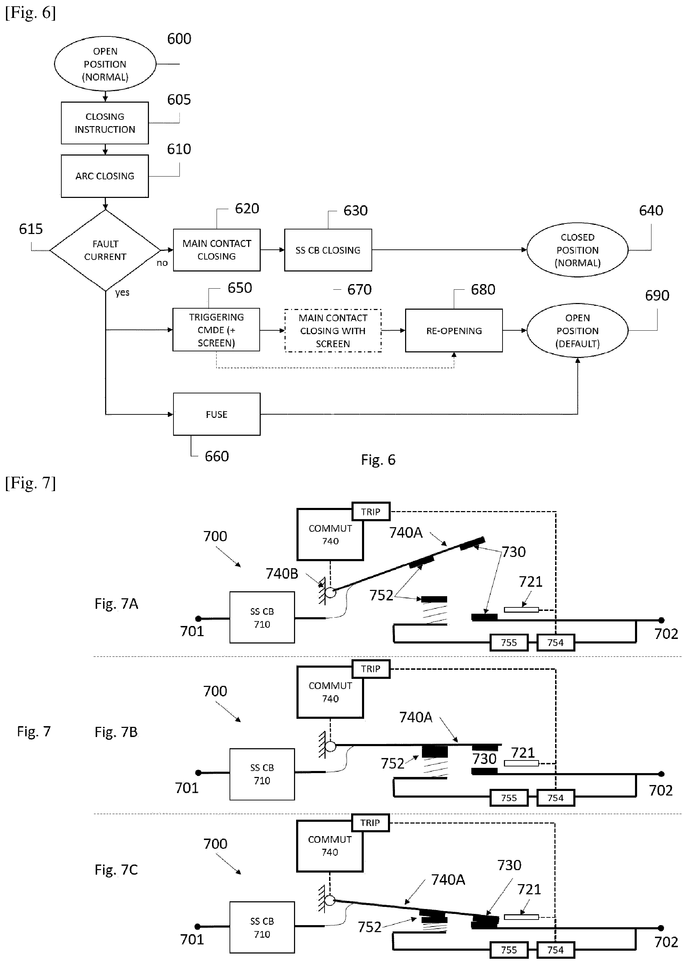

Selon un mode de réalisation de l'invention, lors de cette étape 505, le mécanisme de commutation 340 est activé afin d'initier la commutation des contacts électriques principaux 330 et des contacts électriques secondaires 352 vers l'état ouvert, le mécanisme de commutation 340 étant adapté pour que les contacts électriques principaux 330 ne soit ouverts qu'à l'étape 515 et les contacts électriques secondaires 352 qu'à l'étape 530. Dit autrement, le mécanisme de commutation 340 est adapté pour que l'ouverture des contacts secondaires 352 (étape 530) ne se fasse qu'une fois que les contacts principaux 330 sont effectivement ouverts (étape 515). Dit autrement, les contacts principaux 330 doivent être suffisamment ouverts pour qu'il n'y ait pas d'apparition d'un arc électrique entre les contacts principaux 330 lorsqu'une tension d'arc apparait sur les contacts secondaires 352 lors de leur ouverture. Il existe donc un décalage temporel prédéterminé entre les étapes 515 et 530, dépendant par exemple de la vitesse d'ouverture des contacts principaux 330. Les figures 7 à 10 illustrent des exemples de mécanismes de commutations permettant d'obtenir un décalage temporel entre la commutation des contacts électriques principaux 330 et la commutation des contacts électriques secondaires 352.Dans une étape suivante 510, l'unité de commande 320 commute l'interrupteur de puissance 310 vers l'état ouvert.

Dans une étape 515, débutant ultérieurement ou simultanément à l'étape 510, l'unité de commande 320 commute les contacts électriques principaux 330 vers l'état ouvert, possiblement via le mécanisme de commutation 340. Le temps de commutation plus rapide de l'interrupteur de puissance 310 permet de garantir que l'étape 510 est finalisée avant l'étape 515. Dit autrement, en l'absence de défaut de l'interrupteur de puissance 310, les contacts électriques principaux 330 sont ouverts sans tension, l'interrupteur de puissance 310 ayant préalablement coupé le courant.

A la suite des étapes 510 et 515, dans une étape 520, un courant de défaut peut néanmoins être présent en cas de défaut de l'interrupteur de puissance 310.

Dans le cas où il n'y a pas de courant de défaut, c'est-à-dire que l'interrupteur de puissance 310 ne présente pas de défaut, dans une étape 530, l'unité de commande 320 commute les contacts électriques secondaires 352 vers l'état ouvert, possiblement via le mécanisme de commutation 340.

Dans une étape suivante 540, le dispositif de protection est alors dans un état ouvert. Dans cet état ouvert, l'interrupteur de puissance 310, les contacts électriques principaux 330 et les contacts électriques secondaires 352 sont ouverts, aucun courant ne peut parcourir le dispositif de protection.

Dans le cas où il y a un courant de défaut, c'est-à-dire que l'interrupteur de puissance 310 présente un défaut, dans une étape 550, le dispositif de sécurité 350, étant traversé par le courant de défaut, active le mécanisme de commutation 340 afin de commuter les contacts électriques principaux 330 et les contacts électriques secondaires 352 vers l'état ouvert. Pour cela, le dispositif de sécurité 350 peut comprendre un percuteur 354 adapté pour, lorsqu'un courant de défaut circule dans ledit dispositif de sécurité 350, activer le mécanisme de commutation 340 afin de commuter les contacts électriques principaux 330 et les contacts électriques secondaires 352 vers l'état ouvert.

Selon un mode de réalisation de l'invention, le percuteur 354 comprend un élément de blocage adapté pour maintenir le mécanisme de commutation 340 bloqué une fois que le percuteur 354 a été percuté. Ainsi, avantageusement, lors de l'étape 550, le mécanisme de commutation 340 est bloqué, empêchant toute fermeture ultérieure du dispositif de protection 300.

Selon un mode de réalisation de l'invention, le percuteur 354 ne comprend pas d'élément de blocage. L'activation du mécanisme de commutation 340 afin de commuter les contacts électriques principaux 330 et les contacts électriques secondaires 352 vers l'état ouvert est redondante avec l'étape 505 d'initiation de la commutation vers l'état ouvert des contacts électriques principaux 330 et des contacts électriques secondaires 352. Cela reste toutefois avantageux car cela permet d'avoir une architecture technique simple permettant de protéger le dispositif de protection 300 et fonctionnant aussi bien lors de l'ouverture que lors de la fermeture du dispositif de protection 300.

Dans une étape ultérieure 570, les contacts électriques secondaires 352 sont ouverts. Selon un mode de réalisation de l'invention, l'impédance du dispositif de sécurité 350 réduit la puissance de l'éventuel arc électrique apparaissant à l'ouverture des contacts électriques secondaires 352, permettant une coupure effective du courant de défaut. Cette impédance peut être adaptée grâce à la présence d'un élément limiteur de courant 355.

Dans une étape optionnelle 560, présente si le dispositif de protection comprend un élément limiteur de courant 355 de type fusible, alors ledit fusible fond, coupant le courant dans le dispositif de sécurité 350.

En complément, et dans une étape optionnelle non représentée, et si le dispositif de sécurité comprend un deuxième percuteur, possiblement le même que le percuteur 354, et un écran mobile 331 comme décrit précédemment, le deuxième percuteur déplace alors l'écran mobile 331 dans la deuxième position, empêchant alors une future fermeture des contacts électriques principaux 330.

Dans une étape suivante 580, le dispositif de protection est alors dans un état ouvert. Dans cet état ouvert, l'interrupteur de puissance 310, les contacts électriques principaux 330 et les contacts électriques secondaires 352 sont ouverts, aucun courant ne peut parcourir le dispositif de protection 300.

Selon un mode de réalisation de l'invention, si le dispositif de sécurité 350 comprend un élément limiteur de courant 355, un deuxième percuteur, possiblement le même que le percuteur 354, et un écran mobile 331 comme décrit précédemment, le dispositif de protection 300 ne peut être remis dans son état fermé, le dispositif de sécurité 350 étant coupé par la fusion du fusible 355 et les contacts électriques principaux 330 bloqués par la mise en place de l'écran 331 dans la deuxième position.

Selon un mode de réalisation de l'invention, le dispositif de sécurité 350 est en outre adapté pour, lorsqu'un courant circule dans ledit dispositif de sécurité 350, et après avoir activer le mécanisme de commutation 340 afin de commuter les contacts électriques principaux 330 et les contacts électriques secondaires 352 vers l'état ouvert, bloquer le mécanisme de commutation 340 afin d'empêcher la commutation des contacts électriques principaux 330 et des contacts électriques secondaires 352 vers l'état fermé. Selon ce mode de réalisation, le mécanisme de commutation 340 est bloqué par le percuteur 354 et ne peut plus commuter les contacts électriques principaux 330 et les contacts électriques secondaires 352 vers l'état fermé.

Selon un mode de réalisation de l'invention, le percuteur 354 comprend un élément de blocage adapté pour maintenir le mécanisme de commutation 340 bloqué une fois que le percuteur est percuté.

La **Figure 6** illustre un procédé de mise en sécurité du dispositif de protection 300 ou 400 (ci-après dispositif de protection) tel que décrit précédemment, selon un mode de réalisation de l'invention, mis en œuvre lors de la fermeture du dispositif de protection.

L'étape 600 correspond à l'état ouvert du dispositif de protection. Dans cet état ouvert, l'interrupteur de puissance 310, les contacts électriques principaux 330 et les contacts électriques secondaires 352 sont ouverts, aucun courant ne peut parcourir le dispositif de protection.

Dans une étape 605, une commande de fermeture du dispositif de protection est reçue. Cette commande de fermeture peut correspondre à une commande manuelle réalisée par un utilisateur grâce à un organe de commande du dispositif de protection (par exemple un levier de manœuvre associé au mécanisme de commutation 340) ou à une fermeture automatique commandée par l'unité de commande 320.

Dans une étape ultérieure 610, l'unité de commande 320, possiblement via le mécanisme de commutation 340, commute les contacts électriques secondaires 352 vers l'état fermé.

Dans une étape 615, un courant de défaut peut apparaitre dans le dispositif de protection en cas de défaut de l'interrupteur de puissance 310.

En l'absence de courant de défaut, dans des étapes 620 et 630, possiblement simultanée, l'unité de commande 320 commute les contacts électriques principaux 330 et l'interrupteur de puissance 310 vers l'état fermé.

Dans une étape suivante 640, le dispositif de protection est alors dans un état fermé. Dans cet état fermé, l'interrupteur de puissance 310, les contacts électriques principaux 330 et les contacts électriques secondaires 352 sont fermés, un courant nominal peut parcourir le dispositif de protection.

En présence d'un courant de défaut, dans une étape 650, le dispositif de sécurité 350, étant traversé par le courant de défaut, active le mécanisme de commutation 340 afin de commuter les contacts électriques principaux 330 et les contacts électriques secondaires 352 vers l'état ouvert.

Dans une étape optionnelle 670, si le dispositif de sécurité comprend un deuxième percuteur, possiblement le même que le percuteur 354, et un écran mobile 331 comme décrit précédemment, le deuxième percuteur déplace alors l'écran mobile 331 dans la deuxième position, empêchant alors physiquement la fermeture des contacts électriques principaux 330.

Dans une étape 680, les contacts électriques secondaires 352 sont à l'état ouvert.

Dans une étape optionnelle 660, présente si le dispositif de protection comprend un élément limiteur de courant 355 de type fusible, alors ledit fusible fond, coupant le courant dans le dispositif de sécurité 350.

Selon un mode de réalisation de l'invention, si le dispositif de sécurité comprend un élément limiteur de courant 355, un deuxième percuteur, possiblement le même que le percuteur 354, et un écran mobile 331 comme décrit précédemment, le dispositif de protection ne peut être remis dans son état fermé, le dispositif de sécurité étant coupé par le fusible et les contacts électriques principaux 330 bloqués par l'écran 331.

Selon un mode de réalisation de l'invention, le dispositif de sécurité 350 est en outre adapté pour bloquer le mécanisme de commutation 340 afin d'empêcher la commutation des contacts électriques principaux 330 et des contacts électriques secondaires 352 vers l'état fermé. Selon ce mode de réalisation, le mécanisme de commutation 340 est bloqué par le percuteur 354 et ne peut plus commuter les contacts électriques principaux 330 et les contacts électriques secondaires 352 vers l'état fermé.

Selon un mode de réalisation de l'invention, le percuteur 354 comprend un élément de blocage adapté pour maintenir le mécanisme de commutation 340 bloqué une fois que le percuteur 354 est percuté.

Dans une étape suivante 690, le dispositif de protection est alors dans un état ouvert. Dans cet état ouvert, l'interrupteur de puissance 310, les contacts électriques principaux 330 et les contacts électriques secondaires 352 sont ouverts, aucun courant ne peut parcourir le dispositif de protection.

Les figures 7, 8, 9 et 10 illustrent schématiquement des architectures de mise en œuvre de l'invention selon différents modes de réalisation. Dans ces différents modes de réalisation, le mécanisme de commutation 340 permet de gérer mécaniquement une cinématique de décalage temporel entre la commutation des contacts électriques principaux 330 et les contacts électriques secondaires 352. Cette cinématique de décalage temporel est adaptée pour :
- lors de l'activation du mécanisme de commutation 340 pour ouvrir le dispositif de protection 300, permettre que les contacts électriques principaux 330 soient ouverts avant les contacts électriques secondaires 352, et,
- lors de l'activation du mécanisme de commutation 340 pour fermer le dispositif de protection 300, permettre que les contacts électriques secondaires soient fermés avant les contacts électriques principaux 330.

La **figure 7** illustre schématiquement une architecture de mise en œuvre de l'invention selon un premier mode de réalisation.

La figure 7 comprend les trois figures 7A, 7B et 7C, illustrant la même architecture de mise en œuvre de l'invention dans un dispositif de protection 700 selon le premier mode de réalisation. Chaque figure 7A, 7B et 7C illustre le dispositif de protection 700 et correspond à une position différente d'un élément de contact 740A (ci-après l'élément 740A) compris dans un mécanisme de commutation 740 similaire au mécanisme de commutation 340 décrit précédemment

Le dispositif de protection 700 comprend deux terminaux de raccordement 701 et 702. Les terminaux de raccordement 701 et 702 sont similaires aux terminaux de raccordement 301 et 302 de la figure 3 précédemment décrits.

Le dispositif de protection 700 comprend un interrupteur de puissance 710 similaire à l'interrupteur de puissance 310 du dispositif de protection 300 décrit précédemment.

Le dispositif de protection 700 comprend des contacts électriques principaux 730. Les contacts électriques principaux 730 sont commutables entre un état ouvert, dans lequel les contacts électriques sont séparés, et un état fermé, dans lequel les contacts électriques sont en contact. Les contacts électriques principaux 730 sont similaires aux contacts électriques principaux 330 de la figure 3 précédemment décrits.

Le dispositif de protection 700 comprend des contacts électriques secondaires 752. Les contacts électriques principaux 752 sont commutables entre un état ouvert, dans lequel les contacts électriques sont séparés, et un état fermé, dans lequel les contacts électriques sont en contact. Les contacts électriques principaux 752 sont similaires aux contacts électriques principaux 352 de la figure 3 précédemment décrits.

Le dispositif de protection 700 comprend un mécanisme de commutation 740 (référencé « COMMUT » dans la figure 7). Le mécanisme de commutation 740 est adapté pour commuter les contacts électriques principaux 730 et les contacts électriques secondaires 752 de l'état ouvert vers l'état fermé et de l'état fermé vers l'état ouvert. Le mécanisme de commutation 740 est similaire aux mécanismes de commutation 340 de la figure 3 décrit précédemment.

Dans ce premier mode de réalisation de l'invention, le mécanisme de commutation 740 comprend l'élément de contact 740A, cet élément de contact 740A comprenant une partie supérieure des contacts principaux 730 et une partie supérieure des contacts secondaires 752. L'élément 740A est constitué d'un matériau conducteur électrique et permet une continuité électrique entre les terminaux de raccordement 701 et 702 lorsque la partie supérieure des contacts principaux 730 ou la partie supérieure des contacts secondaires 752 est en contact avec la partie inférieure des contacts respectifs.

L'élément 740A est monté en rotation sur un axe 740B, le mécanisme de commutation 740 étant adapté pour faire pivoter l'élément 740A autour de cet axe 740B, entre une position haute, illustrée dans la figure 7A et une position basse, illustrée dans la figure 7C. La position haute correspond à la position ouverte du dispositif de protection 700. La position basse correspond à la position fermée du dispositif de protection 700.

Le dispositif de protection 700 est adapté pour que, lors du passage de l'élément 740A de sa position haute à sa position basse, et vice-versa, l'élément 740A passe par une position intermédiaire illustrée dans la figure 7B. Dans cette position intermédiaire, les contacts secondaires 752 sont fermés alors que les contacts principaux 730 sont ouverts. Pour cela, comme illustré dans la figure 7, la partie inférieure des contacts secondaires 752 peut être surélevée par rapport à la partie inférieure des contacts principaux 730, la partie inférieure des contacts secondaires 752 pouvant par exemple être montée sur un ressort. Comme cela, lors du passage de la position haute à la position basse de l'élément 740A, l'élément 740A vient d'abord en contact avec la partie inférieure des contacts secondaires 752, puis, par exemple grâce à l'élasticité du ressort sur lequel est montée la partie inférieure des contacts secondaires 752, l'élément 740A peut continuer à descendre pour rejoindre sa position basse illustrée dans la figure 7C dans laquelle les contacts principaux 730 et les contacts secondaires 752 sont tous les deux fermés. Cette disposition décalée des contacts permet d'introduire un décalage temporel entre les contacts principaux et secondaires lors de la mise en contact (fermeture) et lors de l'ouverture du dispositif de protection 700 conformément aux procédés de fermeture et d'ouverture décrits précédemment et illustrés dans les figures 5 et 6.

Le dispositif de protection 700 comprend un percuteur 754 similaire au percuteur 354 du dispositif de protection 300 décrit précédemment. Ce percuteur, lorsqu'il est traversé par un courant de défaut, peut activer un déclencheur (référence « TRIP », pour « tripping » en anglais ou « déclenchement » en français), du mécanisme de commutation 740), déclenchant alors le pivotement vers le haut de l'élément 740A, par une rotation autour de l'axe 740B, ouvrant d'abord les contacts principaux 730 (position intermédiaire illustrée dans la figure 7B) puis les contacts secondaires 752 (position ouverte illustrée dans la figure 7A).

Dit autrement, le dispositif de protection 700 comprend un dispositif de sécurité similaire au dispositif de sécurité 350 du dispositif de protection 300 décrit précédemment. Le dispositif de sécurité du dispositif de protection 700 comprend les contacts secondaires 752, le percuteur 754, adapté pour pouvoir déclencher le mécanisme de commutation 740 et pouvoir mettre en place l'écran 721, et l'élément limiteur de courant 755.

Dans le mode de réalisation illustré dans la figure 7, le percuteur 754 est adapté pour pouvoir déclencher le dispositif de commutation 740 et mettre en place l'écran 721 lorsqu'un courant de défaut d'une intensité supérieure à une valeur prédéterminée circule dans le dispositif de protection.

Le dispositif de protection 700 peut comprendre un écran 721, similaire à l'écran 331 du dispositif de protection 300 décrit précédemment. Dans le mode de réalisation illustré dans la figure 7, l'écran 721 est adapté pour pouvoir être poussé par le percuteur 752 vers la gauche de la figure, pour venir s'interposer entre la partie inférieure et la partie supérieure (sur l'élément 740A) des contacts principaux 730, empêchant de fait la fermeture éventuelle des contacts principaux 730.

Le dispositif de protection 700 peut comprendre un élément limiteur de courant 755, similaire à l'élément 355 du dispositif de protection 300 décrit précédemment.

Le dispositif de protection 700 est adapté pour mettre en œuvre le procédé de mise en sécurité mis en œuvre lors de l'ouverture d'un dispositif de protection décrit précédemment et illustré dans la figure 5.

Le dispositif de protection 700 est adapté pour mettre en œuvre le procédé de mise en sécurité mis en œuvre lors de la fermeture d'un dispositif de protection décrit précédemment et illustré dans la figure 6.

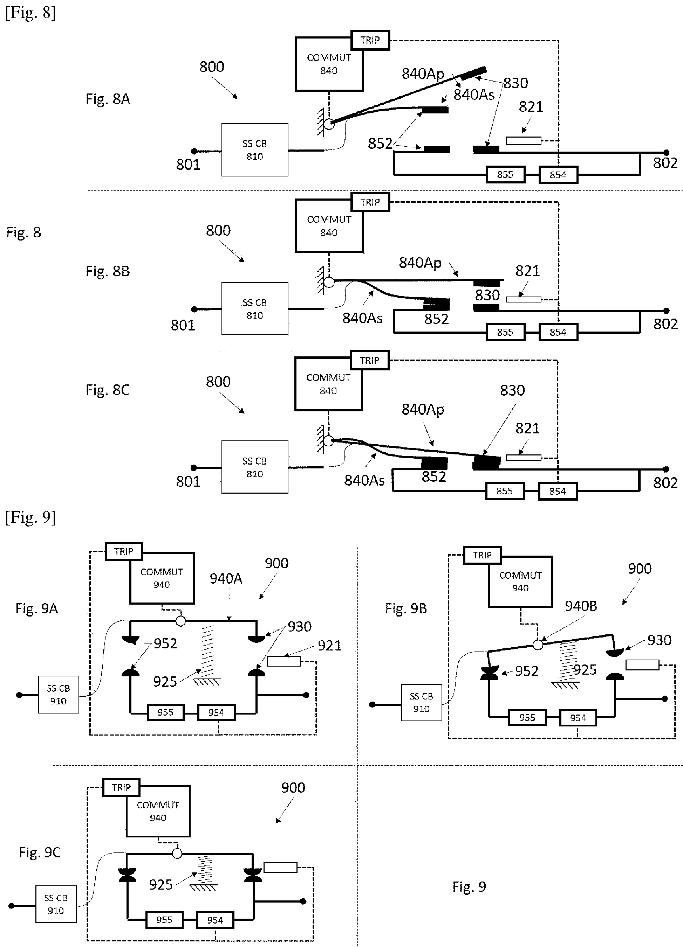

La **figure 8** illustre schématiquement une architecture de mise en œuvre de l'invention selon un deuxième mode de réalisation, permettant de gérer la cinématique de décalage entre le contact principal et le contact d'arc.

La figure 8 comprend les trois figures 8A, 8B et 8C, illustrant la même architecture de mise en œuvre de l'invention dans un dispositif de protection 800 selon le deuxième mode de réalisation. Chaque figure 8A, 8B et 8C illustre le dispositif de protection 800 et correspond à une position différente d'un élément de contact 840A (ci-après l'élément 840A) compris dans un mécanisme de commutation 840 similaire au mécanisme de commutation 340 décrit précédemment.

Le dispositif de protection 800 correspond à un mode de réalisation alternatif du dispositif de protection 700 décrit ci-dessus et diffère de celui-ci en ce qu'il ne comprend pas de ressort supportant la partie inférieure des contacts secondaires 752 et permettant de générer un décalage temporel, lors du mouvement d'abaissement ou de relèvement de l'élément 740A, entre les ouvertures et les fermetures des contacts principaux et secondaires.

Le dispositif de protection 800 comprend un élément 840A, sensiblement similaire à l'élément 740A, comprenant deux sous-éléments 840Ap et 840As. Le sous-élément 840Ap comprend une partie supérieure des contacts principaux 830. Le sous-élément 840As comprend une partie supérieure des contacts secondaires 852 et est flexible. Le sous-élément 840As est par exemple une lame ressort. Le décalage mécanique entre la position des deux sous-éléments 840Ap et 840As dans la position ouverte (illustrée dan al figure 8A), le sous-élément 840As étant alors sous le sous-élément 840Ap, ainsi que l'élasticité de l'élément 840As, permet de générer le décalage temporel précédemment décrit dans les procédés illustrés dans les figures 5s et 6 lors de la fermeture des contacts secondaires 852 et principaux 830.

Le dispositif de protection 800 est adapté pour mettre en œuvre le procédé de mise en sécurité mis en œuvre lors de l'ouverture d'un dispositif de protection décrit précédemment et illustré dans la figure 5.

Le dispositif de protection 800 est adapté pour mettre en œuvre le procédé de mise en sécurité mis en œuvre lors de la fermeture d'un dispositif de protection décrit précédemment et illustré dans la figure 6.

La **figure 9** illustre schématiquement une architecture de mise en œuvre de l'invention selon un troisième mode de réalisation, permettant de gérer la cinématique de décalage entre le contact principal et le contact d'arc.

La figure 9 comprend les trois figures 9A, 9B et 9C, illustrant la même architecture de mise en œuvre de l'invention dans un dispositif de protection 900 selon le troisième mode de réalisation. Chaque figure 9A, 9B et 9C illustre le dispositif de protection 900 et correspond à une position différente d'un élément de contact 940A (ci-après l'élément 940A) compris dans un mécanisme de commutation 940 similaire au mécanisme de commutation 340 décrit précédemment.

Dans ce mode de réalisation alternatif, le décalage temporel, lors du mouvement d'abaissement ou de relèvement de l'élément 940A, entre les ouvertures et les fermetures des contacts principaux 930 et secondaires 952, est obtenu par un porte-à-faux entre un point de guidage 940B de l'élément 940A par le mécanisme de commutation 940 et un moyen élastique de pivot, par exemple un ressort 925.

Le dispositif de protection 900 comprend un percuteur 954 similaire au percuteur 354. Le percuteur 954 est adapté pour déclencher le mécanisme de commutation 940, et possiblement mettre en place l'écran 921, lorsqu'un courant de défaut d'une intensité supérieure à une valeur prédéterminée circule dans le dispositif de protection 900.

Le dispositif de protection 900, comme pour les autres modes de réalisation, peut comprendre un élément limiteur de courant 955, possiblement un fusible, et/ou un écran 921, similaires respectivement à l'élément limiteur de courant 355 et à l'écran 331.

Le dispositif de protection 900 est adapté pour mettre en œuvre le procédé de mise en sécurité mis en œuvre lors de l'ouverture d'un dispositif de protection décrit précédemment et illustré dans la figure 5.

Le dispositif de protection 900 est adapté pour mettre en œuvre le procédé de mise en sécurité mis en œuvre lors de la fermeture d'un dispositif de protection décrit précédemment et illustré dans la figure 6.

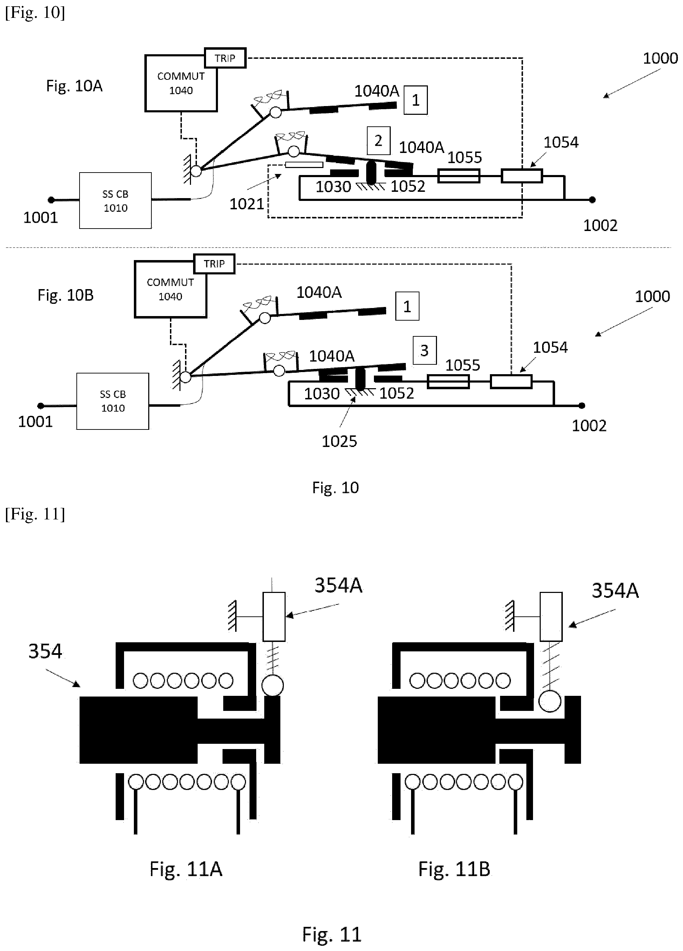

La **figure 10** illustre schématiquement une architecture de mise en œuvre de l'invention selon un quatrième mode de réalisation, permettant de gérer la cinématique de décalage entre le contact principal et le contact d'arc.

La figure 10 comprend les figures 10A et 10B, illustrant la même architecture d'un dispositif de protection 1000 dans trois positions différentes (positions 1, 2 et 3, les trois références correspondant à ces trois positions étant encadrées dans les figures 10A et 10B) d'un élément de contact 1040A (ci-après l'élément 1040A) compris dans un mécanisme de commutation 1040 (la position ouverte 1 étant illustrée sur les deux figures 10A et 10B). Le mécanisme de commutation 1040 comprend l'élément de contact 1040A, l'élément 1040A étant représenté individuellement dans les figures 10A et 10B pour clarifier son fonctionnement.

Les figures 10A et 10B illustrent des terminaux de raccordement 1001 et 1002 similaires aux terminaux de raccordement 301 et 302, ainsi qu'un interrupteur de puissance 1010 similaire à l'interrupteur de puissance 310 (référencé « SS CB » pour « Solid State Circuit Breaker » en anglais). Un percuteur 1052 est illustré, les traits en pointillés illustrant que l'activation de ce percuteur 1052 est adaptée pour déclencher le mécanisme de commutation 1040 (illustré dans les figures 10A et 10B par la référence « TRIP », pour « tripping » en anglais, ou « déclenchement » en français) et, possiblement, pour mettre en place un écran mobile 1021 similaire à l'écran mobile 331 (écran mobile 1021 non représenté dans la figure 10B par simplification). Un élément limiteur de courant 1055, possiblement un fusible, est aussi illustré. Cet élément limiteur de courant 1055 est similaire à l'élément limiteur de courant 355.

Des contacts électriques principaux 1030 et des contacts électriques secondaires 1052 sont illustrés. Les contacts électriques principaux 1030 sont similaires aux contacts électriques principaux 330. Les contacts électriques secondaires 1052 sont similaires aux contacts électriques secondaires 352. Comme illustré, une partie de chacun des contacts électriques principaux et secondaires est comprise sur le même élément 1040A.

L'élément 1040A est un conducteur électrique. L'élément 1040A comprend deux tiges articulées, un élément de type ressort maintenant une forme pliée à l'élément 1040A afin que, lorsque l'élément 1040A est abaissé, comme illustré dans la position 2, l'extrémité de l'élément 1040A, comprenant une partie des contacts électriques secondaires 1052, entre en contact en premier avec la partie fixe des contacts électriques secondaires 1052.

Une butée fixe 1025 est adaptée pour que l'abaissement de l'élément 1040A provoque un effet de bascule sur l'extrémité de l'élément 1040A, le contact entre les contacts électriques secondaires 1055 étant rompu, et les contacts électriques principaux 1030 étant fermés, comme illustré par la position 3 de la figure 10B.

Avantageusement, dans ce mode de réalisation illustré dans la figure 10, les contacts électriques principaux 1030 et les contacts électriques secondaires 1052 ne sont pas en position fermée en même temps.

Lors de la fermeture du dispositif de protection 1000, et de façon similaire au procédé illustré dans la figure 6, les contacts électriques secondaires 1052 sont ainsi bien fermés (étape 610) avant que les contacts électriques principaux 1030 ne le soient (étape 620). Si un courant de défaut est présent, cela active le percuteur 1054 et provoque le déclenchement du mécanisme de commutation 1040, l'élément 1040A étant relevé, ce qui ouvre le dispositif de protection. Dans ce cas, l'élément 1040A est possiblement relevé avant même d'avoir pu entrer en contact avec les contacts électriques principaux 1030.

Lors de l'ouverture du dispositif de protection 1000, et de façon similaire au procédé illustré dans la figure 5, les contacts électriques secondaires 1052 sont ainsi bien ouverts (étape 530 ; correspondant au passage de l'élément 1040A de la position 2 à la position 1) après que les contacts électriques principaux 1030 ne le soient (étape 515, correspondant au début du passage de l'élément 1040A de la position 3 à la position 2). Une particularité du mode de réalisation illustré dans la figure 10 est qu'une étape intermédiaire de fermeture des contacts électriques secondaires 1052 est réalisée immédiatement après l'ouverture des contacts électriques principaux 1030 par la bascule de l'extrémité de l'élément 1040A autour de la butée 1025 lorsque l'élément 1040A est relevé (fin du passage de la position 3 à la position 2 de l'élément 1040A).

La **figure 11** illustre schématiquement une architecture d'un percuteur comprenant un élément de blocage dans sa position activé selon un premier mode de réalisation.

Le percuteur illustré correspond au percuteur 354 décrit précédemment. La figure 11A illustre le percuteur 354 dans une position non activée, dite de repos. La figure 11B illustre le percuteur 354 dans une position activée. Le percuteur 354 comprend ici un élément de blocage 354A empêchant tout retour à la position de repos illustrée dans la figure 11A du percuteur après que le percuteur 354 soit passé dans sa position activée illustrée dans la figure 11B. Le percuteur 354 est ainsi maintenu dans sa position percutée (figure 11B) et est adapté pour ainsi maintenir déclenché (ou activé) un mécanisme de commutation tel que le mécanisme de commutation 340 décrit précédemment. Le mécanisme de commutation 340 est ainsi maintenu bloqué une fois que le percuteur 354 a été activé, empêchant la commutation vers l'état fermé du dispositif de protection 300. Dit autrement, une fois que le percuteur 354 a été activé, celui-ci maintient une action sur le mécanisme de déclenchement (référence « TRIP » dans les figures précédentes) du mécanisme de commutation, maintenant ledit mécanisme de commutation dans sa position ouverte. L'élément de blocage 354A rend irréversible le passage du percuteur 354 de sa position de repos (figure 11A) à sa position activée (figure 11B).

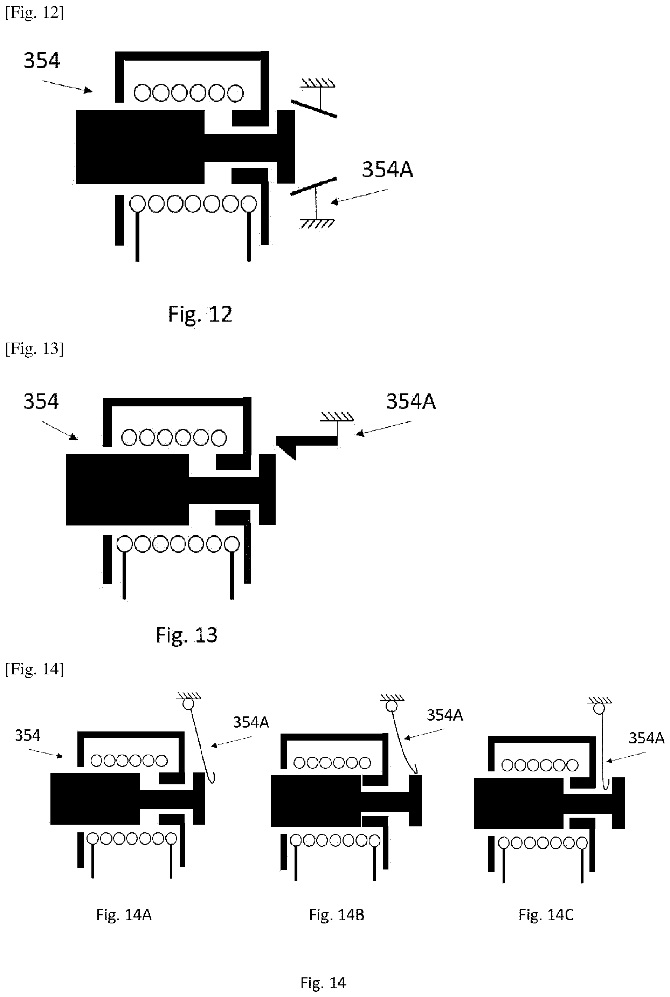

La **figure 12** illustre schématiquement une architecture d'un percuteur comprenant un élément de blocage dans sa position activé selon un deuxième mode de réalisation.

La figure 12 illustre un mode de réalisation alternatif de l'élément de blocage 354A. Dans ce mode de réalisation de l'invention, l'élément de blocage 354A prend une forme conique, permettant le passage du percuteur dans un sens, mais empêchant son retour à la position de repos.

La **figure 13** illustre schématiquement une architecture d'un percuteur comprenant un élément de blocage dans sa position activé selon un troisième mode de réalisation.

La figure 13 illustre un mode de réalisation alternatif de l'élément de blocage 354A. Dans ce mode de réalisation de l'invention, l'élément de blocage 354A prend une forme d'un ergot flexible, permettant de retenir le percuteur dans sa position activée, empêchant son retour à la position de repos.

La **figure 14** illustre schématiquement une architecture d'un percuteur comprenant un élément de blocage dans sa position activé selon un quatrième mode de réalisation.

La figure 14 illustre un mode de réalisation alternatif de l'élément de blocage 354A. Dans ce mode de réalisation de l'invention, l'élément de blocage 354A prend une forme d'une tige flexible comprenant une épaisseur à son extrémité, permettant de retenir le percuteur dans sa position activée (position illustrée dans la figure 14C), empêchant son retour à la position de repos (position illustrée dans la figure 14A). La flexibilité de l'élément de blocage 354A permet au percuteur d'être activée (illustration de la flexibilité de la tige de l'élément de blocage 354A dans la figure 14B, correspondant au passage de la position de repos à la position activée), mais ensuite l'extrémité de la tige flexible vient empêcher le retour à la position de repos. La flexibilité de la lame ressort permet avantageusement de maintenir en position repos et rentrée le percuteur.

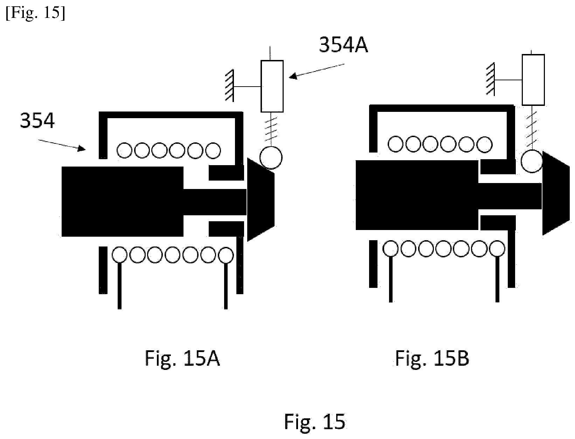

La **figure 15** illustre schématiquement une architecture d'un actionneur comprenant un élément de blocage dans sa position activé selon un cinquième mode de réalisation.

La figure 15 illustre un percuteur similaire au percuteur 354 et comprenant un élément de blocage 354A. Le percuteur illustré correspond à un mode de réalisation alternatif au percuteur illustré dans la figure 11. La forme conique de l'extrémité du percuteur permet de maintenir le percuteur en position rentrée au repos, en effet l'effort du ressort de l'élément de blocage 354A est converti en effort de maintien en position rentré par le contact de l'extrémité de l'élément de blocage 354A sur la forme conique. Ce principe remplace avantageusement un ressort normalement présent dans le percuteur pour maintenir la position repos du percuteur.

## Revendications

1. Dispositif de protection électrique (300) comprenant :
- deux terminaux de raccordement (301, 302),
- des contacts électriques principaux (330), séparables et connectés entre les deux terminaux de raccordement, les contacts électriques principaux étant commutables entre un état ouvert, dans lequel les contacts électriques sont séparés, et un état fermé, dans lequel les contacts électriques sont en contact,
- un mécanisme de commutation (340), le mécanisme de commutation étant adapté pour commuter les contacts électriques principaux vers l'état ouvert, un interrupteur de puissance (310) à semi-conducteurs connecté en série avec les contacts électriques principaux, l'interrupteur de puissance étant adapté pour basculer entre un état ouvert, bloquant le passage du courant, et un état fermé, laissant passer le courant,
le dispositif de protection électrique étant **caractérisé en ce qu'**il comprend :
- un dispositif de sécurité (350) connecté en parallèle aux contacts électriques principaux, le dispositif de sécurité comprenant :
∘ des contacts électriques secondaires (352), les contacts électriques secondaires étant séparables et déplaçables entre un état ouvert et un état fermé, le mécanisme de commutation étant adapté pour commuter les contacts électriques secondaires vers l'état ouvert,
- une unité de commande (320), l'unité de commande étant adaptée pour basculer le dispositif de protection électrique entre un état ouvert, dans lequel l'interrupteur de puissance, les contacts électriques principaux et les contacts électriques secondaires sont dans un état ouvert, et un état fermé, dans lequel l'interrupteur de puissance, les contacts électriques principaux et les contacts électriques secondaires sont dans un état fermé, l'unité de commande étant adaptée pour commander l'interrupteur de puissance et le mécanisme de commutation, et pour :
∘ lors de la fermeture du dispositif de protection électrique, fermer les contacts électriques secondaires du dispositif de sécurité (610) avant les contacts électriques principaux (620) et l'interrupteur de puissance (630), et,
∘ lors de l'ouverture du dispositif de protection électrique, ouvrir les contacts électriques principaux (515) et l'interrupteur de puissance (510) avant d'ouvrir les contacts électriques secondaires (530, 570) du dispositif de sécurité,
le dispositif de sécurité étant adapté pour, lorsqu'un courant d'une intensité supérieure à une valeur prédéterminée circule dans ledit dispositif de sécurité :
- activer le mécanisme de commutation (650) afin de commuter les contacts électriques principaux (330) et les contacts électriques secondaires (352) vers l'état ouvert (680).

2. Dispositif de protection électrique (300) selon la revendication précédente, le dispositif de sécurité comprenant un premier percuteur (354) adapté pour, lorsque le courant d'une intensité supérieure à une valeur prédéterminée circule dans ledit dispositif de sécurité (350), activer le mécanisme de commutation (340) afin de commuter les contacts électriques principaux (330) et les contacts électriques secondaires (352) vers l'état ouvert.

3. Dispositif de protection électrique (300) selon l'une des revendications précédentes, le mécanisme de commutation étant adapté pour commuter les contacts électriques principaux séparables et les contacts électriques secondaires séparables vers l'état ouvert et vers l'état fermé, le dispositif de sécurité étant en outre adapté pour, lorsque le courant d'une intensité supérieure à une valeur prédéterminée circule dans ledit dispositif de sécurité, et après avoir activer le mécanisme de commutation afin de commuter les contacts électriques principaux séparables et les contacts électriques secondaires séparables vers l'état ouvert :
- bloquer le mécanisme de commutation (340) afin d'empêcher la commutation des contacts électriques principaux et des contacts électriques secondaires vers l'état fermé.

4. Dispositif de protection électrique selon les revendications 2 et 3, le premier percuteur (354) comprenant un élément de blocage (354A) adapté pour maintenir le mécanisme de commutation (340) bloqué une fois que le percuteur est percuté.

5. Dispositif de protection électrique selon l'une des revendications précédentes, le dispositif de sécurité comprenant en outre un élément limiteur de courant (355) connecté en série avec les contacts électriques secondaires (352).

6. Dispositif de protection électrique selon la revendication précédente, l'élément limiteur de courant (355) connecté en série avec les contacts électriques secondaires étant un fusible.

7. Dispositif de protection électrique selon l'une des revendications précédentes, le dispositif de sécurité comprenant en outre un écran mobile (331, 721, 921, 1021), l'écran mobile étant constitué d'un matériau isolant électrique et adapté pour être déplacé entre une première position et une deuxième position, l'écran mobile étant placé par défaut dans la première position et étant placé entre les contacts électriques principaux afin d'empêcher le contact entre les contacts électriques principaux dans la deuxième position, le dispositif de sécurité comprenant un deuxième percuteur, le deuxième percuteur étant adapté pour, lorsque le courant d'une intensité supérieure à une valeur prédéterminée circule dans ledit dispositif de sécurité :
- déplacer l'écran mobile dans la deuxième position.

8. Dispositif de protection électrique selon les revendications 4 et 7, le premier percuteur (354) et le deuxième percuteur étant un même percuteur (354).

## Patentansprüche

1. Elektrische Schutzvorrichtung (300), beinhaltend:
- zwei Anschlussklemmen (301, 302),
- elektrische Hauptkontakte (330), die trennbar und zwischen den zwei Anschlussklemmen verbunden sind, wobei die elektrischen Hauptkontakte zwischen einem geöffneten Zustand, in dem die elektrischen Kontakte getrennt sind, und einem geschlossenen Zustand, in dem die elektrischen Kontakte in Kontakt sind, schaltbar sind,
- einen Schaltmechanismus (340), wobei der Schaltmechanismus dazu angepasst ist, die elektrischen Hauptkontakte in den geöffneten Zustand zu schalten,
∘ einen Halbleiterleistungsschalter (310), der mit den elektrischen Hauptkontakten in Reihe verbunden ist, wobei der Leistungsschalter dazu angepasst ist, zwischen einem geöffneten Zustand, der den Durchgang des Stroms blockiert, und einem geschlossenen Zustand, der den Strom durchlässt, umzuschalten,
wobei die elektrische Schutzvorrichtung **dadurch gekennzeichnet ist, dass** sie Folgendes beinhaltet:
- eine Sicherheitsvorrichtung (350), die zu den elektrischen Hauptkontakten parallel geschaltet ist, wobei die Sicherheitsvorrichtung Folgendes beinhaltet:
∘ sekundäre elektrische Kontakte (352), wobei die sekundären elektrischen Kontakte trennbar und zwischen einem geöffneten Zustand und einem geschlossenen Zustand bewegbar sind, wobei der Schaltmechanismus dazu angepasst ist, die sekundären elektrischen Kontakte in den geöffneten Zustand zu schalten,
- eine Steuereinheit (320), wobei die Steuereinheit dazu angepasst ist, die elektrische Schutzvorrichtung zwischen einem geöffneten Zustand, in dem sich der Leistungsschalter, die elektrischen Hauptkontakte und die sekundären elektrischen Kontakte in einem geöffneten Zustand befinden, und einem geschlossenen Zustand, in dem sich der Leistungsschalter, die elektrischen Hauptkontakte und die sekundären elektrischen Kontakte in einem geschlossenen Zustand befinden, umzuschalten, wobei die Steuereinheit dazu angepasst ist, den Leistungsschalter und den Schaltmechanismus zu steuern und:
∘ beim Schließen der elektrischen Schutzvorrichtung die sekundären elektrischen Kontakte der Sicherheitsvorrichtung (610) vor den elektrischen Hauptkontakten (620) und dem Leistungsschalter (630) zu schließen und
∘ beim Öffnen der elektrischen Schutzvorrichtung die elektrischen Hauptkontakte (515) und den Leistungsschalter (510) vor dem Öffnen der sekundären elektrischen Kontakte (530, 570) der Sicherheitsvorrichtung zu öffnen,
wobei die Sicherheitsvorrichtung, wenn ein Strom mit einer Stärke größer als ein vorbestimmter Wert in der Sicherheitsvorrichtung fließt, dazu angepasst ist:
- den Schaltmechanismus (650) zu aktivieren, um die elektrischen Hauptkontakte (330) und die sekundären elektrischen Kontakte (352) in den geöffneten Zustand (680) zu schalten.

2. Elektrische Schutzvorrichtung (300) nach dem vorhergehenden Anspruch, wobei die Sicherheitsvorrichtung einen ersten Schlagbolzen (354) beinhaltet, der, wenn der Strom mit einer Stärke größer als ein vorbestimmter Wert in der Sicherheitsvorrichtung (350) fließt, dazu angepasst ist, den Schaltmechanismus (340) zu aktivieren, um die elektrischen Hauptkontakte (330) und die sekundären elektrischen Kontakte (352) in den geöffneten Zustand zu schalten.

3. Elektrische Schutzvorrichtung (300) nach einem der vorhergehenden Ansprüche, wobei der Schaltmechanismus dazu angepasst ist, die trennbaren elektrischen Hauptkontakte und die trennbaren sekundären elektrischen Kontakte in den geöffneten Zustand und in den geschlossenen Zustand zu schalten, wobei die Sicherheitsvorrichtung, wenn der Strom mit einer Stärke größer als ein vorbestimmter Wert in der Sicherheitsvorrichtung fließt und nachdem sie den Schaltmechanismus aktiviert hat, um die trennbaren elektrischen Hauptkontakte und die trennbaren sekundären elektrischen Kontakte in den geöffneten Zustand zu schalten, ferner dazu angepasst ist:
- den Schaltmechanismus (340) zu blockieren, um das Schalten der elektrischen Hauptkontakte und der sekundären elektrischen Kontakte in den geschlossenen Zustand zu verhindern.

4. Elektrische Schutzvorrichtung nach den Ansprüchen 2 und 3, wobei der erste Schlagbolzen (354) ein Blockierelement (354A) beinhaltet, das dazu angepasst ist, den Schaltmechanismus (340) nach dem Anstoßen des Schlagbolzens blockiert zu halten.

5. Elektrische Schutzvorrichtung nach einem der vorhergehenden Ansprüche, wobei die Sicherheitsvorrichtung ferner ein Strombegrenzungselement (355) beinhaltet, das mit den sekundären elektrischen Kontakten (352) in Reihe verbunden ist.

6. Elektrische Schutzvorrichtung nach dem vorhergehenden Anspruch, wobei das Strombegrenzungselement (355), das mit den sekundären elektrischen Kontakten in Reihe verbunden ist, eine Sicherung ist.

7. Elektrische Schutzvorrichtung nach einem der vorhergehenden Ansprüche, wobei die Sicherheitsvorrichtung ferner eine mobile Abschirmung (331, 721, 921, 1021) beinhaltet, wobei die mobile Abschirmung aus einem elektrisch isolierenden Material besteht und dazu angepasst ist, zwischen einer ersten Stellung und einer zweiten Stellung bewegt zu werden, wobei die mobile Abschirmung standardmäßig in der ersten Stellung platziert ist und in der zweiten Stellung zwischen den elektrischen Hauptkontakten platziert ist, um den Kontakt zwischen den elektrischen Hauptkontakten zu verhindern, wobei die Sicherheitsvorrichtung einen zweiten Schlagbolzen beinhaltet, wobei der zweite Schlagbolzen, wenn der Strom mit einer Stärke größer als ein vorbestimmter Wert in der Sicherheitsvorrichtung fließt, dazu angepasst ist:
- die mobile Abschirmung in die zweite Stellung zu bewegen.

8. Elektrische Schutzvorrichtung nach den Ansprüchen 4 und 7, wobei der erste Schlagbolzen (354) und der zweite Schlagbolzen ein gleicher Schlagbolzen (354) sind.

## Claims

1. Electrical protection device (300) comprising:
- two connection terminals (301, 302),
- main electrical contacts (330), which are separable and connected between the two connection terminals, the main electrical contacts being switchable between an open state, in which the electrical contacts are separated, and a closed state, in which the electrical contacts are in contact,
- a switching mechanism (340), the switching mechanism being designed to switch the main electrical contacts to the open state,
- a semiconductor power switch (310) connected in series with the main electrical contacts, the power switch being designed to shift between an open state, blocking the flow of current, and a closed state, allowing the flow of current,
the electrical protection device being **characterized in that** it comprises:
- a safety device (350) connected in parallel with the main electrical contacts, the safety device comprising:
∘ secondary electrical contacts (352), the secondary electrical contacts being separable and movable between an open state and a closed state, the switching mechanism being designed to switch the secondary electrical contacts to the open state,
- a control unit (320), the control unit being designed to shift the electrical protection device between an open state, in which the power switch, the main electrical contacts and the secondary electrical contacts are in an open state, and a closed state, in which the power switch, the main electrical contacts and the secondary electrical contacts are in a closed state, the control unit being designed to control the power switch and the switching mechanism, and to:
∘ when closing the electrical protection device, close the secondary electrical contacts of the safety device (610) before the main electrical contacts (620) and the power switch (630), and,
∘ when opening the electrical protection device, open the main electrical contacts (515) and the power switch (510) before opening the secondary electrical contacts (530, 570) of the safety device,
the safety device being designed to, when a current of an intensity greater than a predetermined value flows through said safety device:
- activate the switching mechanism (650) in order to switch the main electrical contacts (330) and the secondary electrical contacts (352) to the open state (680).

2. Electrical protection device (300) according to the preceding claim, the safety device comprising a first striker (354) designed to, when the current of an intensity greater than a predetermined value flows through said safety device (350), activate the switching mechanism (340) in order to switch the main electrical contacts (330) and the secondary electrical contacts (352) to the open state.

3. Electrical protection device (300) according to either of the preceding claims, the switching mechanism being designed to switch the separable main electrical contacts and the separable secondary electrical contacts to the open state and to the closed state, the safety device being further designed to, when the current of an intensity greater than a predetermined value flows through said safety device, and after having activating the switching mechanism in order to switch the separable main electrical contacts and the separable secondary electrical contacts to the open state:
- block the switching mechanism (340) in order to prevent the main electrical contacts and secondary electrical contacts from switching to the closed state.

4. Electrical protection device according to Claims 2 and 3, the first striker (354) comprising a blocking element (354A) designed to keep the switching mechanism (340) blocked once the striker has struck.

5. Electrical protection device according to one of the preceding claims, the safety device further comprising a current-limiting element (355) connected in series with the secondary electrical contacts (352).

6. Electrical protection device according to the preceding claim, the current-limiting element (355) connected in series with the secondary electrical contacts being a fuse.

7. Electrical protection device according to one of the preceding claims, the safety device further comprising a movable screen (331, 721, 921, 1021), the movable screen being made up of an electrically insulating material and designed to be moved between a first position and a second position, the movable screen being placed by default in the first position and being placed between the main electrical contacts in order to prevent contact between the main electrical contacts in the second position, the safety device comprising a second striker, the second striker being designed to, when the current of an intensity greater than a predetermined value flows through said safety device:
- move the movable screen to the second position.

8. Electrical protection device according to Claims 4 and 7, the first striker (354) and the second striker being the same striker (354).
